# EUROPEAN PATENT APPLICATION

(11) **EP 4 349 458 A1**
(43) Date of publication of application: **10.04.2024**
(21) Application number: 23197139.1
(22) Date of filing: 13.09.2023
(51) Int. Cl.: B01D 53/94, B01J 29/72, B01J 29/78, B01J 35/56, B01J 35/64, B01J 37/02, F01N 3/035, F01N 3/20, B01J 21/04

(54) **SCRF COATINGS**

(30) Priority: 07.10.2022 GB 202214734
(71) Applicant: Johnson Matthey Public Limited Company, London EC4A 4AB (GB)
(72) Inventor: FOSCHI, Francesco, Royston, SG8 5HE (GB); NOORIZADEH, Hannah, Royston, SG8 5HE (GB); REID, Stuart, Royston, SG8 5HE (GB); ST HILL, Keimoy, Royston, SG8 5HE (GB); WALTON, Mark, Royston, SG8 5HE (GB); WIJEMANNE, Thilanka, Royston, SG8 5HE (GB)
(74) Representative: Boult Wade Tennant LLP

(57) **Abstract**

The present disclosure relates to a coated filter for filtering particulate matter from exhaust gases. The filter has a porous catalyst composition coating, said catalyst composition comprises a zeolite, copper and manganese. The present disclosure also relates to a method forming the coated filter as described herein and an exhaust system with a coated filter as described herein.

## Description

### FIELD OF THE INVENTION

The present disclosure relates to a coated filter for filtering particulate matter from exhaust gases. The filter has a porous catalyst composition coating, said catalyst composition comprises a zeolite, copper and manganese. The present disclosure also relates to a method forming the coated filter as described herein and an exhaust system with a coated filter as described herein.

### BACKGROUND OF THE INVENTION

There are concerns about emissions of particulate matter (PM), commonly referred to as soot, from internal combustion engines and especially from diesel and gasoline engines in automotive applications. The main concerns are associated with potential health effects, and in particular with very tiny particles having sizes in the nanometer range.

Diesel particulate filters (DPFs) and gasoline particulate filters (GPFs) have been fabricated using a variety of materials including sintered metal, ceramic or metal fibres etc., with the most common type in actual mass production being the wall-flow kind made from porous ceramic material fabricated in the form of a monolithic array of many small channels running along the length of the body. Alternate channels are plugged at one end so the exhaust gas is forced through the porous ceramic channel walls that prevent most of the particulate from passing through so only filtered gas enters the environment. Ceramic wall-flow filters in commercial production include those made from cordierite, various forms of silicon carbide and aluminium titanate. The actual shape and dimensions of practical filters on vehicles as well as properties such as the channel wall thickness and its porosity etc. depend on the application concerned. The average dimensions of the pores in the filter channel walls of a ceramic wall-flow filter through which the gas passes are typically in the range 5 to 50µm and usually about 20µm. In marked contrast, the size of most diesel particulate matter from a modem passenger car high speed diesel engine is much smaller, e.g. 10 to 200nm.

Some PM may be retained within the pore structure in the filter walls and this may in some applications gradually build up until the pores are bridged over by a network of PM and this PM network then enables the easy formation of a cake of particulate on the internal walls of the filter channels. The particulate cake is an excellent filter medium and its presence affords very high filtration efficiency. In some applications soot is burned continuously on the filter as it is deposited which prevents a particulate cake from building up on the filter.

For some filters, for example light duty diesel particulate filters, it is periodically necessary to remove trapped PM from the filter to prevent the build-up of excessive back pressure that is detrimental to engine performance and can cause poor fuel economy. So in diesel applications, retained PM is removed from the filter by burning it in air in a process during which the amount of air available and the amount of excess fuel used to achieve the high temperature needed to ignite the retained PM are very carefully controlled. Towards the end of this process, that is usually called regeneration, the removal of the last remaining particulate in the filter can lead to a marked decrease in filtration efficiency and release of a burst of many small particles into the environment. Thus, filters may have low filtration efficiency when they are first used and subsequently after each regeneration event and also during the latter part of each regeneration process.

Thus, it would be desirable to improve and/or maintain filtration efficiency at all times - for example during the early life of a filter when it is first used, and or during regeneration and immediately afterwards, and or when the filter is loaded with soot.

Jiang et al (Journal of Chemistry, 2020, article ID: 1462801) describes powder catalyst preparations with different zeolites which are doped with Cu and either Ce or Mn. The NOx conversion was evaluated and it was found that 4% Cu/SSZ-13 catalysts demonstrated the best catalytic activity under low temperature, the widest active temperature window and the highest comprehensive SCR de-NOx performance. Doping with Ce improved the low-temperature de-NOx performance of the catalysts and broadened the temperature window.

Wei et al (Chemical Engineering Journal, 391, 2020, 123491) discloses the seed assisted synthesis of a Cu Mn UZM-9 zeolite. The introduction of Mn was shown to promote low temperature activity and supress the formation of N₂O during high temperature.

Zhang et al (Applied Catalysis A, General 543, 2017, 247-256) describes powder Cu-SAPO-34 catalysts which are doped by Fe and MnCe. The results show that doping results in high SOz resistance, high hydrothermal stability and lower N₂O yield.

WO2021/028692 (the entire contents of which is incorporated herein by reference) describes a vehicular exhaust filter comprising a porous substrate having an inlet face and an outlet face, the porous substrate comprising inlet channels extending from the inlet face and outlet channels extending from the outlet face; the inlet channels and the outlet channels being separated by a plurality of filter walls having a porous structure; the vehicular exhaust filter being loaded with a refractory powder having a tapped density before loading of less than 0.10 g/cm³; the vehicular exhaust filter having a mass loading of the refractory powder of less than 10 g/L; and wherein greater than 40% of the refractory powder is located within the porous structure of the plurality of filter walls and less than 60% of the refractory powder is coated on an external surface of the plurality of filter walls. WO2021/028692 also describes suitable methods and apparatus for the spraying of a dry refractory powder, such as a dry particulate aerosol, onto the channels of a porous substrate, preferably wherein greater than 50% of the refractory powder, optionally up to 100% of the refractory powder, may be located with the porous structure of the plurality of filter walls.

WO 2020/047356 (the entire contents of which is incorporated herein by reference) relates to a catalyst composition for treating an exhaust gas comprising a molecular sieve which comprises exchanged copper and exchanged manganese. The catalyst composition of WO 2020/047356 is used to form a non-porous coating on an article.

The inventors developed the present invention to ameliorate and/or overcome the problems observed in the prior art. The present invention provides an improved method for the production of a more efficient coated monolith filter which advantageously demonstrates improved filtration efficiencies and less formation of N₂O, without increased backpressure.

### SUMMARY OF THE INVENTION

The invention relates to a coated filter for filtering particulate matter from exhaust gases. The filter has a catalyst composition coating, said catalyst composition comprises:
a) a zeolite,
b) copper, and
c) manganese,
wherein said catalyst composition is porous.

The invention further relates to a method of forming a coated filter (e.g. a coated filter as herein described) and to a calcined coated filter (e.g. a calcined coated filter as herein described).

The invention also relates to a coated filter/calcined coated filter for the treatment of exhaust gases and a vehicular exhaust system comprising the coated filter/calcined coated filter.

### BRIEF DESCRIPTION OF THE FIGURES

**Figure 1** shows the porosimetry data for non-porous and porous coatings
**Figure 2** shows the NOx conversion data at 600°C
**Figure 3** shows the NOx conversion data at 250°C
**Figure 4** shows the N₂O make data at 600°C
**Figure 5** shows the N₂O make data at 250°C

### DETAILED DESCRIPTION OF THE INVENTION

The invention relates to a coated filter for filtering particulate matter from exhaust gases. The filter has a catalyst composition coating, said catalyst composition comprises:
a) a zeolite,
b) copper, and
c) manganese,
wherein said catalyst composition is porous.

In a further embodiment, the invention further relates to a method of forming a coated filter (e.g. a coated filter as herein described) and to a calcined coated filter (e.g. a calcined coated filter as herein described).

In a further embodiment, the invention also relates to a coated filter/calcined coated filter (e.g. a coated filter/calcined coated filter as herein described) for the treatment of exhaust gases.

In a further embodiment, the invention relates to a vehicular exhaust system comprising a coated filter/calcined coated filter (e.g. a coated filter/calcined coated filter as herein described).

The present disclosure will now be described further. In the following passages, different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous.

The catalyst composition of the invention is porous. The porous structure has good gas permeability and does not significantly increase the exhaust gas back pressure. Porosity is generally understood to mean the ratio of the void volume of the pores to the total volume of the substance or body. The porous composition of the invention can have a defined porosity and pore size distribution and is produced by means of a pore former. The porous structure is created by burning out the pore former at high temperatures (e.g. from between 400-800 °C, preferably from 450 to 750°C, most preferably around 500°C).

### Zeolite

The catalyst composition of the present invention includes at least one zeolite. Zeolites are structures formed from alumina and silica and the SAR determines the reactive sites within the zeolite structure. Zeolites useful for the present invention may comprise a small pore zeolite (e.g. a zeolite having a maximum ring size of eight tetrahedral atoms), a medium pore zeolite (e.g. a zeolite having a maximum ring size often tetrahedral atoms), a large pore zeolite (e.g. a zeolite having a maximum ring size of twelve tetrahedral atoms), or a combination of two or more thereof.

When the catalyst composition comprises a small pore zeolite, then the small pore zeolite may have a framework structure represented by a Framework Type Code (FTC) selected from the group comprising (e.g. consisting of) ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, LTA, KFI, MER, MON, NSI, OWE, PAU, PHI, RHO, RTH, SAT, SAV, SFW, SIV, THO, TSC, UEI, UFI, VNI, YUG and ZON, or a mixture and/or combination and/or an intergrowth of two or more thereof. In some embodiments, the small pore zeolite has a framework structure selected from the group comprising (e.g. consisting of) CHA, LEV, AEI, AFX, ERI, LTA, SFW, KFI, DDR and ITE. In some embodiments, the small pore zeolite has a framework structure selected from the group comprising (e.g. consisting of) CHA and AEI. The small pore zeolite may have a CHA framework structure.

When the catalyst composition comprises a medium pore zeolite, then the medium pore zeolite may have a framework structure represented by a Framework Type Code (FTC) selected from the group comprising (e.g. consisting of) AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, PAR, PCR, PON, PLTN, RRO, RSN, SFF, SFG, STF, STI, STT, STW, SVR, SZR, TER, TON, TUN, UOS, VSV, WEI and WEN, or a mixture and/or an intergrowth of two or more thereof. In some embodiments, the medium pore zeolite has a framework structure selected from the group comprising (e.g. consisting of) FER, MEL, MFI, and STT. In some embodiments, the medium pore zeolite has a framework structure selected from the group comprising (e.g. consisting of) FER and MFI, particularly MFI. When the medium pore zeolite has a FER or MFI framework, then the zeolite may be ferrierite, silicalite or ZSM-5.

When the catalyst composition comprises a large pore zeolite, then the large pore zeolite may have a framework structure represented by a Framework Type Code (FTC) selected from the group comprising (e.g. consisting of) AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, RON, RWY, SAF, SAO, SBE, SBS, SBT, SEW, SFE, SFO, SFS, SFV, SOF, SOS, STO, SSF, SSY, USI, UWY, and VET, or a mixture and/or an intergrowth of two or more thereof. In some embodiments, the large pore zeolite has a framework structure selected from the group comprising (e.g. consisting of) AFI, BEA, MAZ, MOR, and OFF. In some embodiments, the large pore zeolite has a framework structure selected from the group comprising (e.g. consisting of) BEA, MOR and FAU. When the large pore zeolite has a framework structure of FTC BEA, FAU or MOR, then the zeolite may be a beta zeolite, faujasite, zeolite Y, zeolite X or mordenite.

In one embodiment, the catalyst composition of the invention comprises a zeolite selected from CHA, AEI, FER, MFI, STW, BEA, FAU, AI, MAZ, MOR and OFF, preferably CHA or AEI, more preferably CHA.

In a preferred embodiment, the catalyst composition of the invention comprises a CHA or AEI zeolite, more preferably a CHA zeolite.

Catalyst compositions of the present invention preferably include a zeolite with a SAR of between 10 and 30, more preferably about 11 to about 28, for example about 12 to about 25, from about 13 to 22, from about 14 to about 21, from about 15 to about 20, from about 16 to about 19, from about 15 to about 18. The silica-to-alumina ratio of zeolites may be determined by conventional analysis. This ratio is meant to represent, as closely as possible, the ratio in the rigid atomic framework of the zeolite crystal and to exclude silicon or aluminum in the binder or in cationic or other form within the channels. Since it may be difficult to directly measure the silica to alumina ratio of zeolite after it has been combined with a binder material, particularly an alumina binder, these silica-to-alumina ratios are expressed in terms of the SAR of the zeolite per se, i.e., prior to the combination of the zeolite with the other catalyst components.

In a preferred embodiment, the catalyst composition of the invention comprises a zeolite with a SAR of between 10 and 30, preferably between 17 and 22, e.g. from between 18 and 21, preferably about 19.

Preferably, the zeolite has a d₉₀ (by volume) of between 0.1 µm and 100 µm, preferably between 0.2 µm and 50 µm, between 0.5 and 40 µm, between 1 µm and 30 µm, between 1.5 µm and 20 µm, between 2 µm and 10 µm, between 2.5 µm and 5µm. In a preferred embodiment, the inorganic particles have a d₉₀ (by volume) of between 0.1 and 10 µm, between 0.5 and 9 µm, between 1 µm and 8 µm, between 1.5 µm and 7 µm, between 2 µm and 6 µm, between 2.5 µm and 5.5 µm, between 3 µm and 5 µm, between 3.5 µm and 4.5 µm. In a more preferred embodiment, the zeolite has a d₉₀ (by volume) of between 3.8 and 4.4 µm, e.g. about 4 µm.

As used herein, the term "d₉₀ (by volume)" refers to a d₉₀ (by volume) measurement as measured by a Malvern Mastersizer^{®} 3000 with Aero s dispersion unit, available from Malvern Panalytical Ltd, Malvern, UK. Dispersion conditions: Air pressure = 2 barg, feed rate = 65%, hopper gap = 1.2mm. Refractive index and absorbtion parameters set in accordance with instructions provided in the Malvern Mastersizer^{®} 3000 User Manual.

In a preferred embodiment, the zeolite is selected from CHA or AEI and has a SAR of between 17 and 22. In a particularly preferred embodiment, the zeolite is CHA and has a SAR of between 18 and 21, preferably about 19.

### Copper

Catalyst compositions of the present invention also include copper. In some embodiments, the copper is incorporated into the zeolite, for example, through ion exchange, spray drying or heat one pot. The copper can be present in the catalyst composition in an amount of at least 1 wt%, at least 1.5 wt%, at least 2 wt%, at least 2.5 wt%, at least 3 wt%, or at least 3.5 wt%. The copper can be present in the catalyst composition in an amount of from about 0.5 to about 5 wt%, about 1 to about 4.5 wt%, e.g. from about 1.5 to about 4 wt%, from about 2 to about 3.5 wt%, from about 2.25 to about 3 wt%, or from about 2.5 to about 2.8 wt%. In some embodiments, copper is present in the catalyst composition in an amount of about 2 wt%, about 2.25 wt%, about 2.5 wt%, about 2.75 wt%, about 3 wt%, or about 3.5 wt%. The reference to wt% is based the weight of the zeolite.

In one embodiment, copper is in an amount of from about 0.5 to about 5 wt%, about 1 to about 4.5 wt%, e.g. from about 2 to about 4 wt%, preferably about 2.75 wt%, based the weight of the zeolite.

In a preferred embodiment, copper is present in the catalyst composition in an amount of between 2 and 4 wt%, e.g. about 2.75 wt%.

Incorporation of the copper has been found to improve the NOₓ conversion. It has also been found to have an extremely wide operating window, allowing the catalyst to be effective at a wide range of temperatures. It has been found that the incorporation of copper allows the catalyst to be effective at temperatures of between 150-600 °C.

### Manganese

Catalyst compositions of the present invention also contain manganese.

In some embodiments, the catalyst compositions of the present invention are free of, or essentially free of any additional transition metals (which include lanthanides and actinides), other than copper, and manganese. For example, in some aspects, the catalyst composition contains additional transition metals (i.e., further to copper and manganese) in an amount less than about 1 wt%; less than about 0.7 wt%; less than about 0.5 wt%; less than about 0.3 wt%; less than about 0.1 wt%; less than about 0.07 wt%; less than about 0.05 wt%; or less than about 0.01 wt%, based on the weight of the molecular sieve.

The total manganese content of the catalyst composition can be in an amount of from about 0.1 to about 3 wt%; about 0.25 to about 2.5 wt%; about 0.5 to about 2 wt%; about 0.65 to about 1.75 wt%, preferably from 0.75 to about 1.5 wt%, preferably about 1.0 wt%, based on the weight of the zeolite.

In a preferred embodiment, the total manganese content of the catalyst composition is between 0.65 and 1.75 wt%, preferably between 0.75 and 1.5 wt%, e.g. about 1 wt%.

Incorporation of manganese has been found result in improved conversion activity to nitrogen (e.g. compared to copper), particularly at temperatures of 400 °C and above.

### Catalyst Composition

The catalyst composition comprises a zeolite, copper and manganese. The catalyst composition can additionally comprise binders, rheology modifiers and/or pore formers.

Examples of binders are alumina (such as Boehmites, alpha alumina, beta alumina, and gamma alumina), silica, (non zeolite) silica-alumina, naturally occurring clays, TiO₂, ZrO₂, and SnO₂. In a preferred embodiment, binders are selected from alumina binders, such as Boehmites, alpha alumina, beta alumina, and gamma alumina.

Examples of rheology modifiers are silanes, amines, acids, polysaccharides (such as starch, celluloses, galactomannan gum, xanthan gum, curdlan etc), dispersible celluloses (e.g. Natrosol), TEAOH (tetraethylammonium hydroxide), Dispex and ammonia.

Examples of pore formers include cellulose pore formers, polyethylene, starch, graphite, polypropylene, polyaramides, polytetrafluoroethylene, polystyrene, cellulose fibres and polymethacrylmethacrylate, e.g. Arbocel, Vivapur, Mipelon PM-200, Propyltex, Orgasol and Remyrise.

In a preferred embodiment, the catalyst composition can comprise a binder which is one or more aluminas, a rheology modifier selected from Natrosol and TEAOH, and a pore former selected from Arbocel and Vivapur.

In some embodiments, the zeolites and pore former are present in a ratio of between 10:1 to 1:3, preferably between 8:1 to 1:2, between 6:1 to 1:1.5, between 5:1 to 1:1, between 4:1 and 1.5:1, between 3:1 and 2:1, e.g. between 5:1 to 1:2 or 3:1 to 1:1.

In some embodiments, the zeolites and binder (e.g. alumina binder) are present in a ratio of between 20:1 and 1:1, e.g. from 15:1 to 2:1, preferably from 12:1 to 3:1, e.g. from 10:1 to 5:1, more preferably about 9:1.

The catalyst composition as described herein can have a viscosity of between 5 and 10,000 cPs, e.g. between 6 and 5,000 cPs, between 7 and 3,000 cPs, between 8 and 2,000 cPs, between 10 and 1800 cPs, between 50 and 1700, between 100 and 1600, between 200 and 1500, between 300 and 1400, between 400 and 1200, between 500 and 1100, between 600 and 1000 cPs, between 700 and 950 cPs, or between 750 and 900 cPs.

The viscosity can be measured at 20° C. on a Brookfield RV DVII+Extra Pro viscometer using a SC4-27 spindle at 50 rpm spindle speed.

The composition as described herein can coat the porous structure of the filter. One or more layers of the composition can be used to coat the filter. Said one or more layers of the composition are preferably then calcined.

Preferably, the total composition loading of the coated filter is between 0.1 g/in³ and 10 g/in³, preferably between 0.1 g/in³ and 8 g/in³, 0.5 g/in³ and 7 g/in³, 0.8 g/in³ and 6 g/in³, 1 g/in³ and 5 g/in³, 1.25 g/in³ and 4 g/in³, 1.5 g/in³ and 3 g/in³, 2 g/in³ and 2.5 g/in³. In a more preferred embodiment, the composition loading of the coated filter is between 0.5 g/in³ and 5 g/in³ or between 1 g/in³ and 2.5 g/in3.

In some aspects, the catalyst composition is effective to promote a reaction of NH₃ with NOx to form nitrogen and water. In certain aspects, the catalyst composition produces about 30% to about 50% less N₂O under standard SCR conditions compared to a Cu-exchanged zeolite. In some aspects, the catalyst composition produces about 30% to about 50% less N₂O at high temperature SCR conditions compared to a Cu-exchanged zeolite. In some aspects, the catalyst composition produces about 30% to about 50% less N₂O at low temperature SCR conditions compared to a Cu-exchanged zeolite.

In some aspects, the catalyst composition converts about the same total NOₓ at high temperature SCR conditions compared to a Cu-exchanged zeolite. In some aspects, the catalyst composition converts about 5-25% more NOₓ at low temperature SCR conditions compared to a Cu-exchanged zeolite.

The filter as herein described can be coated with at least two catalyst compositions, a first catalyst composition and a second catalyst composition.

The first catalyst composition comprises a zeolite (e.g. as described herein), copper (e.g. as described herein), manganese (e.g. as described herein), and can additionally comprise a binder (e.g. as described herein, preferably selected from one or more aluminas) and a rheology modifier (e.g. as described herein, preferably selected from Natrosol and TEAOH).

The second catalyst composition is the catalyst composition as described herein, and can additionally comprise a binder (e.g. a binder as described herein, preferably selected from one or more aluminas), a rheology modifier (e.g. a rheology modifier as described herein, preferably selected from Natrosol and TEAOH), and a pore former (e.g. a pore former as described herein, preferably selected from Arbocel and Vivapur).

A first catalyst composition can be present on the substrate between 50 and 100% of the length of the substrate, e.g. between 55% and 99%, between 60% and 98%, between 65% and 97%, between 70% and 96%, between 75% and 95%, between 80% and 90%. In a preferred embodiment, a first catalyst composition is present on the substrate between 60 and 98%, 70 and 90%, preferably between 75% and 85%, e.g. about 80% of the length of the substrate.

A first catalyst composition can further comprise one or more binders (e.g. binders as described herein, such as those selected from the group comprising (e.g. consisting of) alumina (such as Boehmites, alpha alumina, beta alumina, and gamma alumina), silica, (non zeolite) silica-alumina, naturally occurring clays, TiO₂, ZrO₂, and SnO₂), and/or one or more rheology modifiers (e.g. rheology modifiers as described herein, such as Natrosol, TEAOH (tetraethylammonium hydroxide), Dispex or ammonia). In a preferred embodiment, a first catalyst composition comprises the catalyst composition as herein described, one or more aluminas (e.g. Boehmites, alpha alumina, beta alumina, and gamma alumina) and one or more rheology modifiers selected from Natrosol and TEAOH.

The first catalyst composition can be an in-wall coating. An in-wall coating is where most or all of the composition is present in the pores within the porous substrate. Some of the in-wall coating can be present on-wall. On-wall means that the coating is present as a coating on the walls of the substrate. In some embodiments, between 60-100% of the first catalyst composition is present in-wall, preferably between 70-99%, between 75-98%, between 80-98%, between 85-97%, between 90-96%. In an alternative embodiment, at least 60%, at least 70%, at least 75%, at least 80%, at least 90% or at least 95% of the first catalyst composition is present in-wall.

As would be appreciated by a person skilled in the art, the percentage of the coating that is present "on-wall" or "in-wall" can be determined by techniques of the art, such as scanning electron microscopy (SEM) or optical microscopy.

The viscosity of the first catalyst composition can be between 2 and 20 cPs, e.g. between 3 and 15 cPs, between 4 and 12, between 5 and 10, between 6 and 8, e.g. between 2 and 10 cPs. In an alternative embodiment, the viscosity of the first catalyst composition is less than 20 cPs, e.g. less than 15 cPs or less than 10 cPs.

A second catalyst composition can be present on the substrate between 50 and 100% of the length of the substrate, e.g. between 55% and 99%, between 60% and 98%, between 65% and 97%, between 70% and 96%, between 75% and 95%, between 80% and 90%. In a preferred embodiment, a second catalyst composition is present on the substrate between 50 and 100%, preferably between 75% and 98%, 85% and 95%, e.g. about 90% of the length of the substrate.

A second catalyst composition comprises the catalyst composition as herein described. In some embodiments, the second catalyst composition can further comprise one or more binders (e.g. those as described herein, such as those selected from the group comprising (e.g. consisting of) alumina (such as Boehmites, alpha alumina, beta alumina, and gamma alumina), silica, (non zeolite) silica-alumina, naturally occurring clays, TiO₂, ZrO₂, and SnO₂), one or more rheology modifiers (e.g. rheology modifiers as described herein, such as Natrosol, TEAOH (tetraethylammonium hydroxide), Dispex or ammonia), and/or one or more pore formers (for example pore formers as described herein, such as cellulose pore formers, polyethylene, starch, graphite, polypropylene, polyaramides, polytetrafluoroethylene, polystyrene, cellulose fibres and polymethacrylmethacrylate, e.g. Arbocel, Vivapur, Mipelon PM-200, Propyltex, Orgasol and Remyrise). In a preferred embodiment, a second catalyst composition comprises the catalyst composition as herein described, one or more aluminas (e.g. Boehmites, alpha alumina, beta alumina, and gamma alumina), one or more rheology modifiers selected from Natrosol and TEAOH and one or more pore formers selected from Arbocel and Vivapur.

The second catalyst composition can be an on-wall coating. Some of the on-wall coating can be present in-wall. In some embodiments, between 60-100% of the second catalyst composition is present on-wall, preferably between 70-99%, between 75-98%, between 80-98%, between 85-97%, between 90-96%. In an alternative embodiment, at least 60%, at least 70%, at least 75%, at least 80%, at least 90% or at least 95% of the second catalyst composition is present on-wall.

The viscosity of the second catalyst composition can be between 5 and 10,000 cPs, between 6 and 5,000 cPs, between 7 and 3,000 cPs, between 8 and 2,000 cPs, between 10 and 1800 cPs, between 50 and 1700, between 100 and 1600, between 200 and 1500, between 300 and 1400, between 400 and 1200, between 500 and 1100, between 600 and 1000 cPs, between 700 and 950 cPs, or between 750 and 900 cPs.

In some embodiments, the weight ratio of the first catalyst composition: second catalyst composition is from 1:1 to 5:1, e.g. from 2:1 to 4:1, preferably from 2.5:1 to 3: 1, e.g. around 2.5:1.

In some embodiments, the percentage of the first catalyst composition present relative to the total amount of catalyst composition is from 60-80%, e.g., from 65 to 75%, e.g., around 70%. The percentage of the second catalyst composition present relative to the total amount of catalyst composition can be from 20 to 40%, e.g., from 25-35%, e.g., around 30%.

### The filter

The filter may be formed, for example, from sintered metal, ceramic or metal fibers, etc. For example, the filter may be formed from cordierite, various forms of silicon carbide or aluminium titanate.

In some embodiments, the filter is a monolith filter. It is particularly preferred that the monolith filter is a wall-flow filter. A wall-flow filter is well-known and typically, adjacent channels are alternatively plugged at each end of the monolith filter such that, in use, the exhaust gas passes along an inlet channel (i.e., a channel open at an inlet end of the monolith filter for receiving an exhaust gas) and is forced to pass through the channel walls an into an adjacent outlet channel (i.e., a channel open at an outlet end of the monolith filter).

The channel walls have a distribution of fine pores providing the monolith filter with the required porosity, the average dimensions of the pores in the channel walls, e.g. the filter walls, are typically in the range from 5 to 50 µm. Each channel has a gas-contacting surface. That is, each channel has a surface suitable for contacting, for example, an exhaust gas when in use. The surface may be provided by the channel wall surface and/or by the pores contained therein.

In another particularly preferred embodiment, the monolith filter is a catalyst filter (i.e., a catalytic filter). Catalytic monolith filters are well-known and exhibit a catalytic function such as oxidation, NOₓ-trapping, or selective catalytic reduction activity.

The shape and dimensions of the filter, for example properties such as the channel wall thickness and its porosity etc. may be varied depending on the intended application for the filter. The filter may be configured for use with an internal combustion engine to filter the exhaust gas emitted by the internal combustion engine. The internal combustion engine may be a gasoline spark ignition engine. However, the filter can also be used when configured for use with an internal combustion engine in the form of a diesel or gasoline engine.

A monolith filter can comprise a plurality of channels for the passage of an exhaust gas, each channel having a gas-contacting surface. Monolith filters are well-known in the art. Monolith filters may sometimes be referred to as substrates, preferably honeycomb substrates, preferably ceramic honeycomb substrates. Such substrates comprise a plurality of channels which are suitable for the passage of an exhaust gas. The channels are parallel and run from an inlet end (or a first end) to an outlet end (or a second end), i.e., the channels run axially through the filter. Adjacent channels can be alternatively plugged at each end of the monolith filter such that, in use, the exhaust gas passes along an inlet channel (i.e., a channel open at an inlet end of the monolith filter for receiving an exhaust gas) and is forced to pass through the channel walls an into an adjacent outlet channel (i.e., a channel open at an outlet end of the monolith filter). Monolith filters can comprise a plurality of inlet channels and a plurality of outlet channels. Typically, the channels have a square cross-section, though any known monolith design may be employed.

### Method of Preparation

A further aspect of the present invention is directed to a method of preparing a catalyst composition (e.g. a catalyst composition as described herein), said method comprising incorporating copper and manganese into the zeolite.

The present invention relates to a method of forming a coated filter (e.g. filter coated with a catalyst composition as herein described), said method comprising:
i) incorporating copper and manganese into the zeolite to form a catalyst composition,
ii) forming a first washcoat comprising the catalyst composition of step i), one or more binders and one or more rheology modifiers (e.g. one or more binders and one or rheology modifiers as herein described),
iii) applying the first washcoat to the filter (e.g. a filter as herein described),
iv) optionally drying the filter,
v) forming a second washcoat comprising the catalyst composition of step i), one or more binders, one or more rheology modifiers and one or more pore formers (e.g. one or more binders, one or more rheology modifiers and one or more pore formers as herein described),
vi) applying the second washcoat to the filter coated with the first washcoat from step iii) or step iv)
vii) drying and calcining the article to form a coated filter (e.g. a filter coated with a catalyst composition as herein described).

The catalyst composition can be prepared by methods known in the art. For example, spray drying, ion exchange and heat one pot. Spray drying can be carried out either sequentially or combined. For example, for a sequential spray drying method, copper is spray dried onto the zeolite material. The material is calcined and then spray dried again with manganese and calcined again. For a combined spray drying method, a slurry of soluble precursors of copper (e.g. copper acetate or copper carbonate), soluble precursors of manganese (e.g. manganese acetate) and the zeolite is prepared and the resulting slurry is spray dried in one step. In an alternative embodiment, heat one pot can be carried out, in which soluble precursors of copper (e.g. copper acetate or copper carbonate) are added to a slurry of zeolite and then this is heated (e.g. heated to approx. 60-140 °C, preferably around 70 °C) for a time period (e.g. 1 to 6 hours, preferably around 2 hours). A soluble precursor of manganese (e.g. manganese acetate) is added and this is kept at the same temperature for a further time period (e.g. 1 to 6 hours, preferably around 2 hours).

In a preferred embodiment, the catalyst composition is prepared by combined spray drying. This method has been found to have the least problems with side reactions and additional steps needed, and has been found to be most cost and time efficient.

The catalyst composition as described herein can be formulated in a washcoat. In addition to the catalyst composition, the washcoat composition can further comprise:
(i) one or more binders, e.g. those as herein described, such as selected from the group comprising (e.g. consisting of) alumina (such as Boehmites, alpha alumina, beta alumina, and gamma alumina), silica, (non zeolite) silica-alumina, naturally occurring clays, TiO₂, ZrO₂, and SnO₂, and/or
(ii) one or more rheology modifiers (e.g. those as herein described, such as Natrosol, TEAOH (tetraethylammonium hydroxide), Dispex or ammonia), and/or
(iii) one or more pore formers (e.g. those as herein described, for example cellulose pore formers, polyethylene, starch, graphite, polypropylene, polyaramides, polytetrafluoroethylene, polystyrene, cellulose fibres and polymethacrylmethacrylate, e.g. Arbocel, Vivapur, Mipelon PM-200, Propyltex, Orgasol and Remyrise)

The washcoat can be applied to a substrate, such as a metal or ceramic flow through monolith substrate or a filtering substrate, e.g. one including for example a wall-flow filter or sintered metal or partial filter.

The washcoat can be applied to a substrate using any conventional method, for example, an Automated Inversion Depositor (AID) process or Precision Coating (PC) process. The AID process involves using a piston to push the washcoat into the filter, the part is flipped and then the washcoat soaks into the wall of the substrate. The PC process involves using a showerhead to apply the correct dose rate, the washcoat is drawn into the part by gravity and/or vacuum, allowing the washcoat to soak into the wall of the substrate. In a preferred embodiment, the PC process is used to apply the washcoat to the substrate.

In some embodiments, two or more doses of washcoat are applied to the substrate.

A first dose of washcoat can be applied to the substrate between 50 and 100% of the length of the substrate, e.g. between 55% and 99%, between 60% and 98%, between 65% and 97%, between 70% and 96%, between 75% and 95%, between 80% and 90%. In a preferred embodiment, a first dose of washcoat is applied to the substrate between 70 and 90%, preferably between 75% and 85%, e.g. about 80% of the length of the substrate.

A first dose of washcoat comprises the catalyst composition as herein described. In some embodiments, the first dose of washcoat can further comprise one or more binders (e.g. those as herein described, such as selected from the group comprising (e.g. consisting of) alumina (such as Boehmites, alpha alumina, beta alumina, and gamma alumina), silica, (non zeolite) silica-alumina, naturally occurring clays, TiO₂, ZrO₂, and SnO₂), and/or one or more rheology modifiers (e.g. rheology modifiers as herein described, such as Natrosol, TEAOH (tetraethylammonium hydroxide), Dispex or ammonia). In a preferred embodiment, a first dose of washcoat comprises the catalyst composition as herein described, one or more aluminas (e.g. Boehmites, alpha alumina, beta alumina, and gamma alumina) and one or more rheology modifiers selected from Natrosol and TEAOH.

The first dose of washcoat can be an in-wall coating. An in-wall coating is where most or all of the washcoat is present in the pores within the porous substrate. Some of the in-wall coating can be present on-wall. On-wall means that the washcoat is present as a coating on the walls of the substrate. In some embodiments, between 60-100% of the first dose of washcoat is present in-wall, preferably between 70-99%, between 75-98%, between 80-98%, between 85-97%, between 90-96%. In an alternative embodiment, at least 60%, at least 70%, at least 75%, at least 80%, at least 90% or at least 95% of the first dose of washcoat is present in-wall.

As would be appreciated by a person skilled in the art, the percentage of the coating that is present "on-wall" or "in-wall" can be determined by techniques of the art, such as scanning electron microscopy (SEM) or optical microscopy.

The viscosity of the first dose of washcoat can be between 2 and 20 cPs, e.g. between 3 and 15 cPs, between 4 and 12, between 5 and 10, between 6 and 8, e.g. between 2 and 10 cPs. In an alternative embodiment, the viscosity of the first dose of washcoat is less than 20 cPs, e.g. less than 15 cPs or less than 10 cPs.

A second dose of washcoat can be applied to the substrate between 50 and 100% of the length of the substrate, e.g. between 55% and 99%, between 60% and 98%, between 65% and 97%, between 70% and 96%, between 75% and 95%, between 80% and 90%. In a preferred embodiment, a second dose of washcoat is applied to the substrate between 75% and 100%, preferably between 80% and 98%, more preferably between 85% and 95% e.g. about 90% of the length of the substrate.

A second dose of washcoat comprises the catalyst composition as herein described. In some embodiments, the second dose of washcoat can further comprise one or more binders (e.g. those as herein described, such as those selected from the group comprising (e.g. consisting of) alumina (such as Boehmites, alpha alumina, beta alumina, and gamma alumina), silica, (non zeolite) silica-alumina, naturally occurring clays, TiO₂, ZrO₂, and SnO₂), one or more rheology modifiers (e.g. rheology modifiers as herein described, such as Natrosol, TEAOH (tetraethylammonium hydroxide), Dispex or ammonia), and/or one or more pore formers (for example those as herein described, such as cellulose pore formers, polyethylene, starch, graphite, polypropylene, polyaramides, polytetrafluoroethylene, polystyrene, cellulose fibres and polymethacrylmethacrylate, e.g. Arbocel, Vivapur, Mipelon PM-200, Propyltex, Orgasol and Remyrise). In a preferred embodiment, a second dose of washcoat comprises the catalyst composition as herein described, one or more aluminas (e.g. Boehmites, alpha alumina, beta alumina, and gamma alumina), one or more rheology modifiers selected from Natrosol and TEAOH and one or more pore formers selected from Arbocel and Vivapur.

The second dose of washcoat can be an on-wall coating. Some of the on-wall coating can be present in-wall. In some embodiments, between 60-100% of the second dose of washcoat is present on-wall, preferably between 70-99%, between 75-98%, between 80-98%, between 85-97%, between 90-96%. In an alternative embodiment, at least 60%, at least 70%, at least 75%, at least 80%, at least 90% or at least 95% of the second dose of washcoat is present on-wall.

The viscosity of the second dose of washcoat can be between 5 and 10,000 cPs, e.g. between 6 and 5,000 cPs, between 7 and 3,000 cPs, between 8 and 2,000 cPs, between 10 and 1800 cPs, between 50 and 1700, between 100 and 1600, between 200 and 1500, between 300 and 1400, between 400 and 1200, between 500 and 1100, between 600 and 1000 cPs, between 700 and 950 cPs, or between 750 and 900 cPs.

The coated substrate is preferably dried and calcined. The drying and/or calcining steps can be carried out after each individual dose of washcoat is applied. In an alternative embodiment, the drying and/or calcining steps are carried out once all of the doses of washcoat are applied. In one preferred embodiment, the substrate is dried after each dose of washcoat and the substrate is calcined once all of the washcoat doses have been applied. In another embodiment, the substrate is dried and calcined after each washcoat dose is applied.

In a preferred embodiment, the substrate is coated with a first washcoat (e.g. a first washcoat as herein described) and then the resulting coated substrate is dried. The dried coated substrate is then coated with a second washcoat (e.g. a second washcoat as herein described) and then the resulting coated substrate is dried and calcined.

Preferably, the step of drying is carried out at about 100 to 120°C. Preferably, the drying step is carried out for 15 min to 2 hours, e.g. from 20 min to 1 hour. The step of drying can be used to remove at least 80%, at least 85%, at least 90%, at least 95%, or at least 98% of the moisture present in the coating. In a preferred embodiment, the drying step removes at least 90% of the moisture present in the coating.

The dried coated substrate can then be calcined at a temperature of from 400 to 800°C, preferably from 450 to 750°C, e.g. around 500°C. Preferably, the step of calcining comprises heating to a temperature of at least 200°C, preferably at least 300°C, more preferably at least 400°C, and/or a temperature of at most 1,000°C, at most 900°C, at most 800°C, at most 700°C, at most 600°C, preferably at most 550°C, more preferably at most 530°C. Accordingly, calcining preferably comprises heating to a temperature of from 200°C to 1,000°C, preferably from 300°C to 900°C, preferably from 400°C to 800°C, more preferably from 400°C to 700°C, even more preferably from 450°C to 550°C., e.g. about 500 °C.

Such temperatures have been found as most suitable for forming a calcined coated filter with improved filtration efficiency and increased tolerance to water. Such temperatures are particularly advantageous when the coated filter is a coated catalyst filter, such as a coated catalytic wall-flow filter, since these temperatures allow for calcination of the silicone resin into a cross-linked silicon dioxide without negatively impacting the catalytic efficiency (i.e., without degrading the coated catalyst filter). Ideally, calcination temperatures are kept as low as possible to reduce the likelihood of affecting catalytic activity of any catalyst present in the coated filter.

The mean pore size of the calcined catalyst composition is preferably in the range of 0.1 µm to 10 µm, more preferably from 0.2 µm to 8 µm, and even more preferably from 0.5 µm to 7 µm, from 0.75 µm to 6 µm, from 0.8 µm to 5 µm, from 1 µm to 4 µm, from 1.2 µm to 3 µm, from 1.5 µm to 2 µm, preferably from 1.6 µm to 1.8 µm. The mean pore size of the calcined catalyst composition can preferably be in the range of 0.1 µm to 10 µm, from 0.5 µm to 7 µm, from 1 µm to 4 µm, from 1.5 µm to 2 µm, more preferably from 1.6 µm to 1.8 µm.

The mean pore size of the calcined catalyst composition can be measured by techniques of the art, e.g. by Hg intrusion Porosimetry (MIP) on a Micromeritics Autopore instrument.

The pore size distribution exhibits three different pore sizes, at approx. 0.1 µm to 1 µm, at approx. 1.5 µm to 1.8 µm and at approx. 10 µm to 50 µm. Without wishing to be bound by theory, the pore size from 0.1 µm to 1 µm is thought to correspond to the typical washcoat pore structure, the pore size from 1.5 µm to 1.8 µm is thought to correspond to the pore structure of the washcoat pore former materials and the pore size of from 10 µm to 50 µm is thought to correspond to the substrate pore structure.

The inventors have surprisingly found that using a washcoat which forms a porous coating and is present on-wall allows the formation of a longer coat depth of the washcoat without unacceptably increasing the backpressure. The longer coating depth gives improved access to the active SCR material while also allowing the more effective capture of soot (i.e. better filtration). The soot loaded backpressure, SLBP (i.e. the backpressure when the filter has captured soot), has also been found to be lower. This is thought to be because the soot is not blocking the pores within the wall, as soot in-wall results in high backpressure.

### Coated Filter

In a further aspect of the invention, herein provides a coated filter for treatment of an exhaust gas, wherein the coated filter comprises the catalyst composition as described herein or obtained by the method as described herein.

The catalyst composition (e.g. the catalyst composition as described herein) can be in the form of a washcoat, preferably a washcoat that is suitable for coating a filter, such as a metal or ceramic flow through monolith filter, e.g. one including for example a wall-flow filter or sintered metal or partial filter. Accordingly, another aspect of the invention is a washcoat comprising a catalyst composition as described herein. A further aspect of the invention is a catalyst filter comprising a catalyst composition as described herein, which may be applied as a washcoat.

Preferred filters for use are monoliths having a so-called honeycomb geometry which comprises a plurality of adjacent, parallel channels, each channel typically having a square cross-sectional area. The honeycomb shape provides a large catalytic surface with minimal overall size and pressure drop. The catalyst composition can be deposited on a flow-through monolith filter (e.g., a honeycomb monolithic catalyst support structure with many small, parallel channels running axially through the entire part) or filter monolith substrate such as a wall-flow filter, etc. In another embodiment, the catalyst composition is formed into an extruded-type catalyst. Preferably, the catalyst composition is coated on a filter in an amount sufficient to reduce the NOx contained in an exhaust gas stream flowing through the filter. In certain embodiments, at least a portion of the filter may also contain a platinum group metal, such as platinum (Pt), to oxidize ammonia in the exhaust gas stream or perform other functions such as conversion of CO into COz.

The catalyst filter as described herein preferably comprises a honeycomb monolith body comprising a catalyst composition (e.g. the catalyst composition as described herein), preferably as a washcoat layer thereon.

### Exhaust Gas System and Method

According to a further aspect there is provided an exhaust gas system comprising the coated filter described herein or the filter made by the method as described herein, and, optionally, a combustion engine. The combustion engine can be a diesel engine, a lean-burn gasoline engine or an engine powered by liquid petroleum gas or natural gas. Preferably, the combustion engine is a diesel engine. The coated filter can be arranged downstream of the engine to treat the exhaust gas emitted therefrom.

According to a yet further aspect of the invention, there is provided a method for the treatment of an exhaust gas, the method comprising contacting the exhaust gas with the coated filter as described herein.

Although preferred embodiments of the invention have been described herein in detail, it will be understood by those skilled in the art that variations may be made thereto without departing from the scope of the invention or of the appended claims.

The invention will now be described further in relation to the following non-limiting examples and figures.

As used herein, the singular form of "a", "an" and "the" include plural references unless the context clearly dictates otherwise. The use of the term "comprising" is intended to be interpreted as including such features but not excluding other features and is also intended to include the option of the features necessarily being limited to those described. In other words, the term also includes the limitations of "consisting essentially of' (intended to mean that specific further components can be present provided they do not materially affect the essential characteristic of the described feature) and "consisting of" (intended to mean that no other feature may be included such that if the components were expressed as percentages by their proportions, these would add up to 100%, whilst accounting for any unavoidable impurities), unless the context clearly dictates otherwise.

As used herein, the term "g/L" (grams per litre) refers to the mass of powder divided by the volume of the filter.

The foregoing detailed description has been provided by way of explanation and illustration, and is not intended to limit the scope of the appended claims. Many variations of the presently preferred embodiments illustrated herein will be apparent to one of ordinary skill in the art, and remain within the scope of the appended claims and their equivalents.

### EXAMPLES

### Example 1 - Preparation of a coated filter

### Washcoat 1:

A washcoat comprising Cu(2.75)Mn(1.0)Zeolite (where the zeolite is a CHA zeolite with a SAR of 19), and stabilised alumina suspended in water was prepared. TEAH (tetraethylammonium hydroxide) in 4 wt% of the zeolite is added prior to the alumina addition.

### Washcoat 2:

A washcoat comprising Natrasol (a cellulose thickener), Cu(2.75)Mn(1.0)Zeolite (where the zeolite is a CHA zeolite with a SAR of 19), Arbocel UFC100 (a cellulose pore former) and Boehmite alumina suspended in water was prepared. The viscosity target was approx. 750-900 cps.

### Washcoat 3:

A washcoat comprising Natrasol (a cellulose thickener), Cu(2.75)Mn(1.0)Zeolite (where the zeolite is a CHA zeolite with a SAR of 19), and stabilised alumina suspended in water was prepared. TEAH (tetraethylammonium hydroxide) in 4 wt% of the zeolite is added prior to the alumina addition. The viscosity target was 350-600 cps and coat depth was 25-35%.

### Method for preparing a porous coated filter:

Washcoat 1 was applied to the outlet end of a filter to coat approx. 80% of the filter volume.
Washcoat 2 was applied to the inlet end of the filter to coat approx. 90% of the filter volume.

### Method for preparing a non-porous coated filter:

Washcoat 1 was applied to the outlet end of a filter to coat approx. 80% of the filter volume.
Washcoat 3 was applied to the inlet end of the filter to coat approx. 25% of the filter volume.

### Example 2 - Porosimetery

Porosimetry data was collected for the following compositions:
1. Non-porous coating: Cu(3.3)zeolite (where the zeolite is a CHA zeolite with a SAR of 19)
2. Porous coating: Cu(3.3)zeolite (where the zeolite is a CHA zeolite with a SAR of 19)

The non-porous coating was applied in two batches, one to the outlet end of a filter to coat approx. 80% of the filter volume and a second coat was applied to the inlet end of the filter to coat approx. 25% of the filter volume. Samples for the porosimetry data were taken from the front, middle (overlap region) and rear sections of the part.

The porous coating was applied in two batches, one to the outlet end of a filter to coat approx. 80% of the filter volume and a second coat was applied to the inlet ed of the filter to coat approx. 90% of the filter volume. Samples for the porosimetry data were taken from the middle (overlap region) and rear sections of the part.

Scanning electron microscopy (SEM) with back scattered electron detection was used to image the parts. The porosity characteristics and pore size distributions were determined using Hg porosimetry and samples were taken from the front, middle and rear sections of the part.

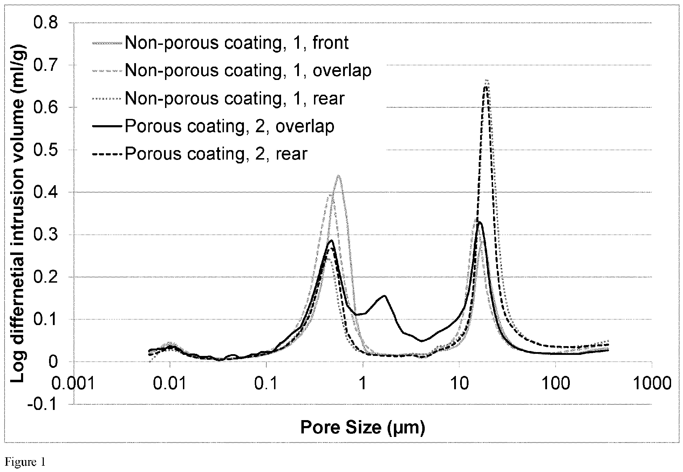

The pore size distribution in Figure 1 exhibits three different pore sizes, at approx. 0.1 µm to 1 µm, at approx. 1.5 µm to 1.8 µm and at approx. 10 µm to 50 µm. Without wishing to be bound by theory, the pore size from 0.1 µm to 1 µm is thought to correspond to the typical washcoat pore structure (and is present in compositions 1 and 2), the pore size from 1.5 µm to 1.8 µm (which is only present in composition 2) is thought to correspond to the pore structure of the washcoat pore former materials and the pore size of from 10 µm to 50 µm is thought to correspond to the substrate pore structure (and is present in compositions 1 and 2). The pore size between 1.5 µm to 1.8 µm is not present in the non-porous coating 1, and therefore shows that the porous coating has additional porous structure.

### Example 3 - NOx Conversion

NOx conversion was calculated at low temperature (250°C) and high temperature (600 °C). Four different compositions were used:
1. Cu(2.75)Mn(1.0)Zeolite (where the zeolite is a CHA zeolite with a SAR of 19)
2. Cu(2.25)Mn(0.75)Zeolite (where the zeolite is a CHA zeolite with a SAR of 19)
3. Cu(3.3)Zeolite (where the zeolite is a CHA zeolite with a SAR of 19)
4. Cu(2.25)Zeolite (where the zeolite is a CHA zeolite with a SAR of 19)

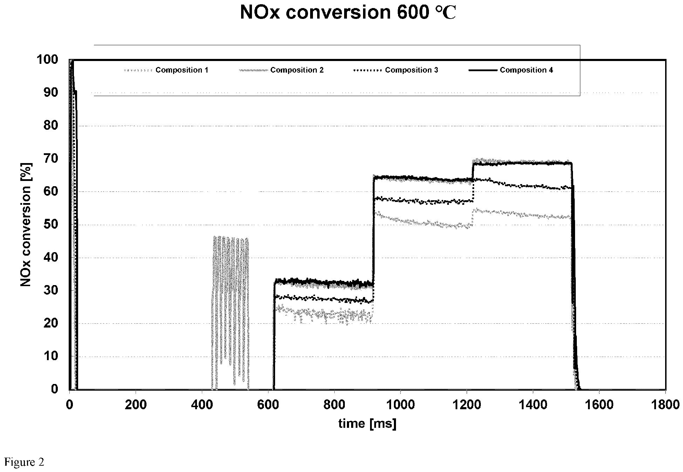

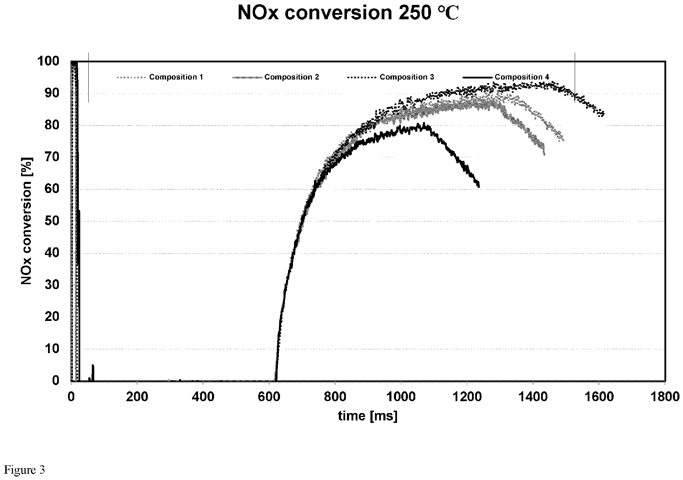

Results are shown in Figures 2 and 3, in this case the wall flow monolith containing the example compositions 1-4 above are fitted into an exhaust system of a diesel engine comprising an upstream DOC and a urea dosing system prior to the wall flow monolith. The engine is run at the following conditions to probe the SCR performance of the catalysts: Figure 3 - 250C, 400kg/hr, ANR (Ammonia NOx Ratio) of 2.0. Figure 2 - 600C, 520kg/hr with ANR's of 0.6, 1.5 and 2.0. The NOx pre and post the wall flow monolith is measured using FTIR.

As exemplified in Figure 2, the NOx conversion at 600 °C was essentially the same for compositions 4 and 2, indicating that the presence of Mn does not adversely affect the NOx conversion at high temperatures. At low temperatures, it was found that compositions according to the invention resulted in improved NOx conversion (see Figure 3).

### Example 4 - N₂O Make

N₂O make was calculated at low temperature (250°C) and high temperature (600 °C). Four different compositions were used:
1. Cu(2.75)Mn(1.0)Zeolite (where the zeolite is a CHA zeolite with a SAR of 19)
2. Cu(2.25)Mn(0.75)Zeolite (where the zeolite is a CHA zeolite with a SAR of 19)
3. Cu(3.3)Zeolite (where the zeolite is a CHA zeolite with a SAR of 19)
4. Cu(2.25)Zeolite (where the zeolite is a CHA zeolite with a SAR of 19)

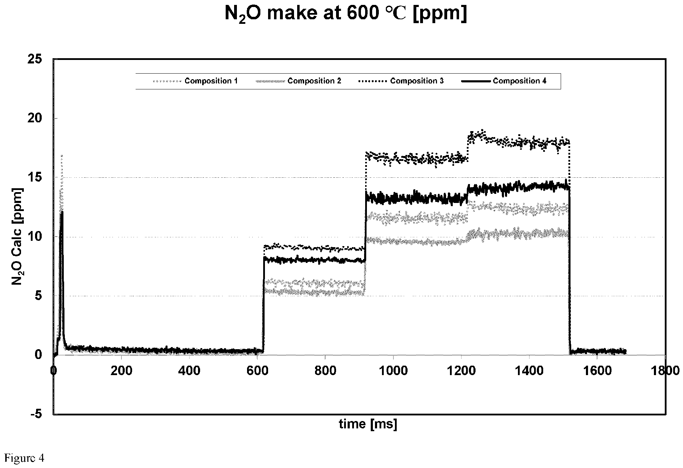

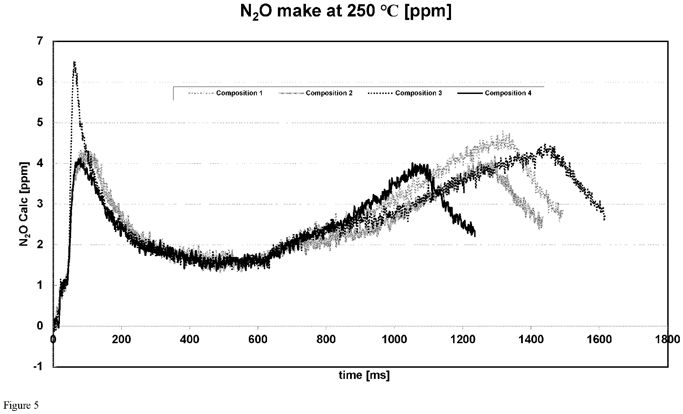

Results are shown in Figures 4 and 5, in this case the wall flow monolith containing the example compositions 1-4 above are fitted into an exhaust system of a diesel engine comprising an upstream DOC and a urea dosing system prior to the wall flow monolith. The engine is run at the following conditions to probe the SCR performance of the catalysts: Figure 5 - 250C, 400kg/hr, ANR (Ammonia NOx Ratio) of 2.0. Figure 4 - 600C, 520kg/hr with ANR's of 0.6, 1.5 and 2.0. The N₂O pre and post the wall flow monolith is measured using FTIR.

As exemplified in Figure 4, the NOx conversion at 600 °C was shown to be lower for compositions 1 and 2, indicating that the combination of Cu/Mn and zeolite according to the invention shows improved N₂O make. This effect was also demonstrated at low temperatures (see Figure 5).

## Claims

1. A filter with a catalyst composition coating, said catalyst composition comprises:
a) a zeolite,
b) copper, and
c) manganese,
wherein the catalyst composition is porous.

2. The filter of claim 1, wherein said zeolite is selected from CHA, AEI, FER, MFI, STW, BEA, FAU, AI, MAZ, MOR and OFF, preferably CHA or AEI, more preferably CHA.

3. The filter of claim 1 or claim 2, wherein said zeolite has a SAR of between 10 and 30, preferably 17 and 22, e.g. from between 18 and 21, preferably about 19.

4. The filter of any preceding claim, wherein the copper is in an amount of from about 0.5 to about 5 wt%, about 1 to about 4.5 wt%, e.g. from about 2 to about 4 wt%, preferably about 2.75 wt%, based the weight of the zeolite.

5. The filter of any preceding claim, wherein manganese is in an amount of from about 0.1 to about 3 wt%; about 0.25 to about 2.5 wt%; about 0.5 to about 2 wt%; about 0.65 to about 1.75 wt%, preferably from 0.75 to about 1.5 wt%, preferably about 1.0 wt%, based on the weight of the zeolite.

6. The filter of any preceding claim, wherein the catalyst composition is calcined.

7. The filter of claim 6, wherein the wherein the mean pore size of the calcined catalyst composition is in the range of 0.1 µm to 10 µm, preferably from 0.5 µm to 7 µm, from 1 µm to 4 µm, from 1.5 µm to 2 µm, preferably from 1.6 µm to 1.8 µm.

8. The filter of any preceding claim, wherein the catalyst composition further comprises:
I. one or more binders, preferably one or more binders selected from alumina, silica, silica-alumina, naturally occurring clays, TiO₂, ZrO₂, or SnO₂,
II. one or more rheology modifiers, preferably rheology modifiers such as Natrosol, TEAOH Dispex or ammonia, and/or
III. one or more pore formers, preferably pore formers selected from cellulose pore formers, polyethylene, starch, graphite, polypropylene, polyaramides, polytetrafluoroethylene, polystyrene, cellulose fibres and polymethacrylmethacrylate, e.g. Arbocel, Vivapur, Mipelon PM-200, Propyltex, Orgasol and Remyrise.

9. The filter of any preceding claim, wherein the filter is coated with at least two catalyst compositions, a first catalyst composition and a second catalyst composition, wherein:
the first catalyst composition comprises a zeolite (e.g. as defined in claims 2 and/or 3), copper (e.g. as defined in claim 4), manganese (e.g. as defined in claim 5), a binder, and a rheology modifier,
the second catalyst composition is as defined in any of claims 1-5, and additionally comprises a binder, a rheology modifier, and a pore former.

10. The filter of claim 9, wherein the first catalyst composition is an in-wall coating.

11. The filter of claims 9 or 10, wherein the second catalyst composition is an on-wall coating.

12. A method of forming a coated filter (e.g. filter coated with a catalyst composition according to any preceding claim), said method comprising:
i) incorporating copper and manganese into the zeolite to form a catalyst composition,
ii) forming a first washcoat comprising the catalyst composition of step i), one or more binders and one or more rheology modifiers,
iii) applying the first washcoat to the filter,
iv) optionally drying the filter,
v) forming a second washcoat comprising the catalyst composition of step i), one or more binders, one or more rheology modifiers and one or more pore formers,
vi) applying the second washcoat to the filter coated with the first washcoat from step iii) or step iv)
vii) drying and calcining the article to form a coated filter.

13. A filter as defined in any one of claims 1 to 11 or made by the method of claim 12, for the treatment of an exhaust gas.

14. A vehicular exhaust system comprising the filter as defined in any one of claims 1 to 11 or the filter made by the method of claim 12.
